# EUROPÄISCHE PATENTSCHRIFT

(11) **EP 1 818 214 B1**
(45) Veröffentlichungstag und Bekanntmachung des Hinweises auf die Patenterteilung: **07.09.2011**
(21) Anmeldenummer: 07002680.2
(22) Anmeldetag: 08.02.2007
(51) Int. Cl.: B60Q 1/26

(54) **Leuchte, insbesondere Heckleuchte eines Fahrzeuges, vorzugsweise eines Kraftfahrzeuges**
Light, in particular rear light of a vehicle, especially a motor vehicle
Feu, en particulier feu arrière d'un véhicule, de préférence d'un véhicule automobile

(30) Priorität: 14.02.2006 DE 102006007712
(43) Veröffentlichungstag der Anmeldung: 15.08.2007
(73) Patentinhaber: odelo GmbH, 71409 Schwaikheim (DE)
(72) Erfinder: Hans-Clemens Steffel, 70327 Stuttgart (DE); Rosenstein, Filip, 70184 Stuttgart (DE); Mack, Bernd, 73630 Remshalden (DE)
(74) Vertreter: Meyer, Thorsten

(56) Entgegenhaltungen:
- EP-A- 1 512 579
- EP-A- 1 604 865
- DE-A1- 4 341 234
- DE-A1- 10 359 982
- DE-C1- 10 137 818
- US-A1- 2006 023 461

## Beschreibung

Die Erfindung betrifft eine Leuchte, insbesondere eine Heckleuchte, eines Fahrzeuges, vorzugsweise eines Kraftfahrzeuges, nach dem Oberbegriff des Anspruches 1.

Bei Heckleuchten von Kraftfahrzeugen tritt das Problem auf, daß bei eingeschalteter Heckleuchte die Signallichter unterschiedlich hell gesehen werden, je nachdem, unter welchem Winkel der Betrachter zur Heckleuchte sich befindet. Dies kann dazu führen, daß die Heckleuchte in einem Fall den Fahrer eines nachfolgenden Kraftfahrzeuges blendet, während der Fahrer eines seitlichen und hinter dem Fahrzeug befindlichen Kraftfahrzeuges die Heckleuchte bzw. das entsprechende Signallicht gar nicht oder erst zu spät bemerkt. Dadurch ist die Signalfunktion der Leuchte eingeschränkt.

Durch EP 1 804 865 A1 ist eine beispielsweise als Heckleuchte eines Kraftfahrzeugs ausgebildete Leuchte eines Fahrzeugs mit wenigstens zwei Signallichtem, die jeweils wenigstens ein Leuchtmittel aufweisen, bekannt. Die Signalfunktion wenigstens des einen Signallichtes ist in Abhängigkeit von sensorspezifischen Daten einschaltbar oder veränderbar. Die Signalfunktion kann die Lichtstärke des Signallichts sein. Bei den sensorspezifischen Daten handelt es sich um eine Verschmutzung der Lichtscheibe, Umgebungshelligkeit, Sichtweite und Abstand zu anderen Verkehrsteilnehmern.

Durch EP 1 512579A2 ist eine Leuchte zur Anzeige einer Drehrate eines Kraftfahrzeugs bekannt. Hierzu wird vermittels fahrzeug-spezifischer Daten in Abhängigkeit von der momentanen Drehrate des Kraftfahrzeugs ein veränderliches Muster erzeugt. Das Muster wird durch unterschiedliche Helligkeit von Wiederholblinksignalfunktion, Bremssignalfunktion etc. erzeugt.

Der Erfindung liegt die Aufgabe zugrunde, die gattungsgemäße Leuchte so auszubilden, daß ihre Signalfunktion einwandfrei erkannt werden kann.

Diese Aufgabe wird bei der gattungsgemäßen Leuchte erfindungsgemäß mit den kennzeichnenden Merkmalen des Anspruches 1 gelöst.

Bei der erfindungsgemäßen Leuchte wird die Signalfunktion, beispielsweise die Helligkeit des abgestrahlten Lichtes, in Abhängigkeit von sensorspezifischen Daten eingeschaltet oder verändert. So kann beispielsweise die Lichtstärke verringert werden, wenn sich ein nachfolgendes Kraftfahrzeug unmittelbar hinter dem vorausfahrenden Fahrzeug befindet. Dann ist es nicht notwendig, daß die Leuchte mit hoher Intensität Licht abstrahlt. Befindet sich jedoch beispielsweise ein Kraftfahrzeug seitlich und hinter dem vorausfahrenden Kraftfahrzeug, dann wird bei der erfindungsgemäßen Leuchte aufgrund der Daten die Signalfunktion, beispielsweise die Lichtstärke, so erhöht, daß auch der Fahrer dieses seitlichen Kraftfahrzeuges die Signalfunktion einwandfrei erkennen kann. Somit ist es möglich, daß für alle erfaßten Verkehrsteilnehmer in verschiedenen Richtungen und Abständen beispielsweise die Helligkeit der Leuchte unabhängig vom Standort des erfaßten Verkehrsteilnehmers immer gleich stark erscheint. Die Lichtstärke des Signallichtes ist nur eine Möglichkeit der Signalfunktion der erfindungsgemäßen Leuchte. Die Signalfunktion kann auch beispielhaft darin bestehen, daß bei einem sich schnell von hinten nähernden Kraftfahrzeug die Leuchte beispielsweise zu blinken anfängt. Anhand der fahrzeugspezifischen Daten kann festgestellt werden, daß das die erfindungsgemäße Leuchte aufweisende Kraftfahrzeug eine geringe Geschwindigkeit hat oder gar steht, beispielsweise am Ende eines Staus, während aus den sensorspezifischen Daten ermittelt werden kann, mit welcher Geschwindigkeit sich von hinten ein Fahrzeug nähert. Durch die Verknüpfung dieser Daten kann die entsprechende Signalfunktion ausgelöst bzw. verändert werden.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: in schematischer Darstellung ein Kraftfahrzeug mit einer erfindungsgemäßen Leuchte,
- Fig. 2: in schematischer Darstellung ein Kraftfahrzeug mit einer erfindungsgemäßen Leuchte, in deren Funktionsbereich sich ein zweites Kraftfahrzeug befindet,
- Fig. 3: ein Blockschaltdiagramm der erfindungsgemäßen Leuchte,
- Fig. 4: eine Ansteuerschaltung der erfindungsgemäßen Leuchte.

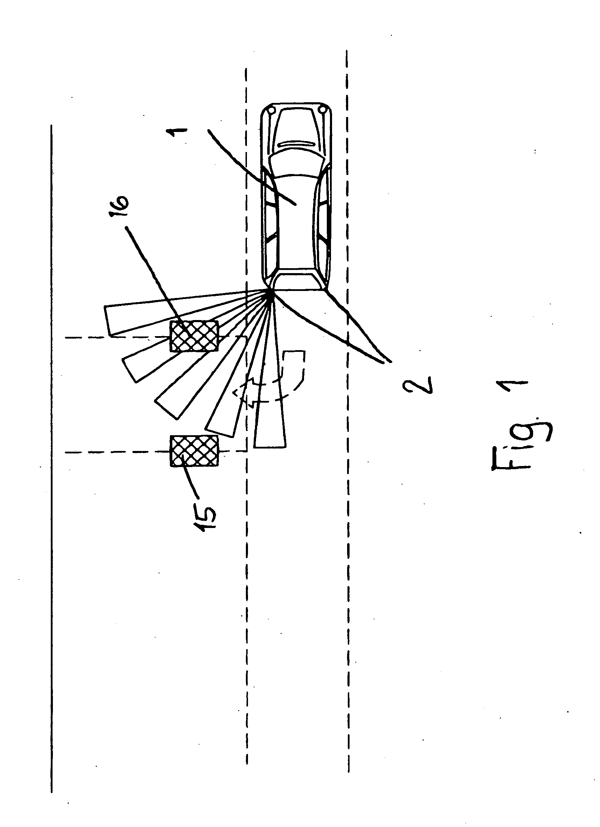

Das in Fig. 1 schematisch dargestellte Kraftfahrzeug weist in seinem Heckbereich zwei Heckleuchten 2 auf, in denen jeweils zumindest ein Blinklicht, ein Bremslicht und ein Schlußlicht vorhanden sind. Darüber hinaus können die Heckleuchten 2 auch ein Rückfahrlicht und/oder ein Nebelschlußlicht aufweisen. Die Heckleuchten 2 sind so ausgebildet, daß sie von nachfolgenden Verkehrsteilnehmern einwandfrei erkannt werden können, unabhängig vom Blickwinkel auf die Heckleuchten 2. Vorteilhaft sind die Heckleuchten 2 so ausgebildet, daß sie in unterschiedlichen Richtungen jeweils ein gleiches Helligkeitsbild abgeben.

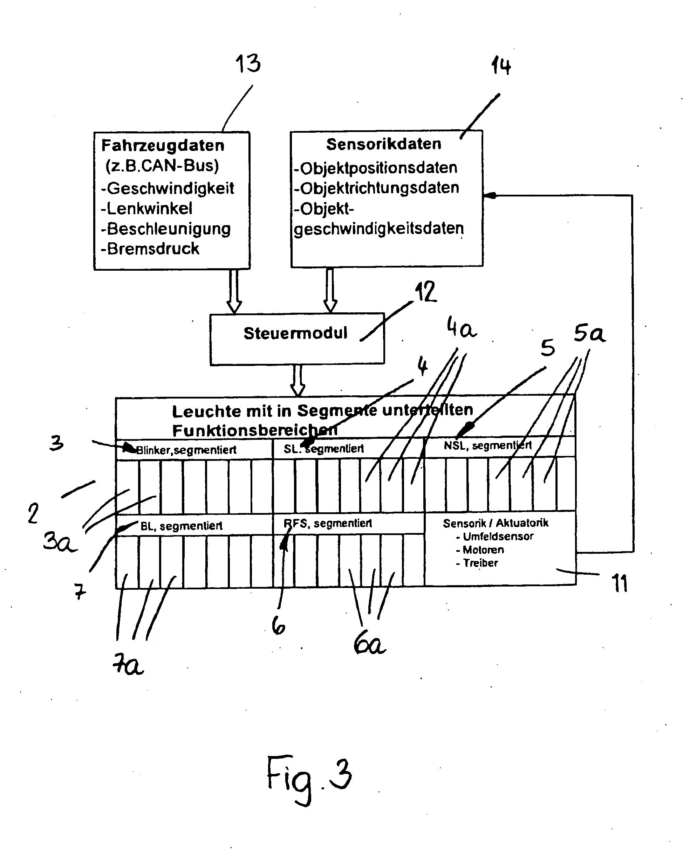

Fig. 3 zeigt schematisch die Heckleuchte 2, die einen Blinker 3, ein Schlußlicht 4, ein Nebelschlußlicht 5, einen Rückfahrscheinwerfer 6 und ein Bremslicht 7 aufweist. Im dargestellten Ausführungsbeispiel bestehen diese Signallichter 3 bis 7 jeweils aus LEDs, die sich durch eine lange Lebensdauer auszeichnen. Die Signallichter 3 bis 7 können aber auch durch andere Leuchtmittel gebildet werden. Die Signallichter 3 bis 7 sind in einzelne Segmente 3a bis 7a unterteilt. Sind die Leuchtmittel durch LEDs gebildet, dann kann diese Segmentunterteilung der Signallichter 3 bis 7 sehr einfach vorgenommen werden. So kann jedes Segment 3a bis 7a aus wenigstens jeweils einer LED bestehen.

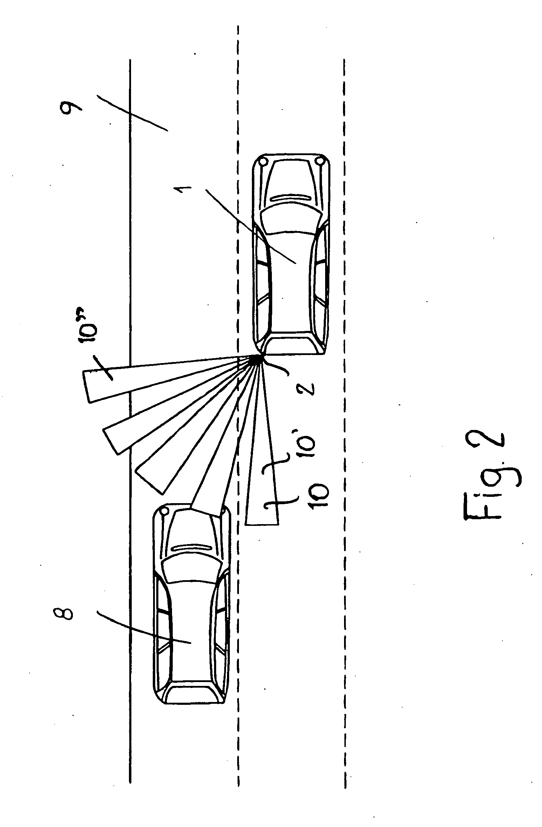

Die einzelnen Leuchtmittelsegmente 3a bis 7a werden unabhängig voneinander angesteuert. So können die in diesen Segmenten liegenden Leuchtmittel so angesteuert werden, daß sie unterschiedlich hell Licht abstrahlen. Zur Helligkeitsregelung der Segmente 3a bis 7a wird vorteilhaft eine Pulsweitenmodulation eingesetzt. Die Helligkeitsregelung der Segmente 3a bis 7a erfolgt in der Weise, daß beim Blick auf die Rückseite des Kraftfahrzeuges 1 die Heckleuchte unabhängig vom Betrachtungswinkel gleich hell Licht abstrahlt. Dadurch ist gewährleistet, daß nachfolgende Kraftfahrzeuge, die aus verschiedenen Winkeln auf das vorausfahrende Kraftfahrzeug zufahren, weder geblendet werden noch das von der Heckleuchte 2 abgestrahlte Licht zu spät erkennen. In Fig. 2 ist beispielhaft ein nachfolgendes Kraftfahrzeug 8 dargestellt, das sich auf einer Überholspur 9 befindet und das vorausfahrende Kraftfahrzeug 1 überholen möchte. Die unterschiedlichen Blinkwinkel sind in Fig. 2 schematisch durch die Dreiecke 10 gekennzeichnet. In jeder Blickrichtung strahlt die Heckleuchte 2 das Licht in gleicher Helligkeit ab. Befindet sich das Kraftfahrzeug 8 unmittelbar hinter dem Kraftfahrzeug 1, dann ist die Lichtstärke der Heckleuchte geringer, als wenn sich das Kraftfahrzeug 8 auf der Überholspur 9 befindet. Die Anpassung der Lichtstärke erfolgt automatisch. Die Dreiecke 10 kennzeichnen die von den einzelnen Segmenten 3a bis 7a ausgesandten Lichtstrahlen des entsprechenden Signallichtes 3 bis 7. Die Segmente 3a bis 7a jedes Signallichtes 3 bis 7 sind vorteilhaft geneigt zueinander angeordnet, so daß sie das Licht in unterschiedliche Richtungen abstrahlen. Die in Fahrtrichtung des Kraftfahrzeuges 1 nach hinten abstrahlenden Segmente 3a bis 7a haben eine geringere Lichtstärke als die schräg nach hinten Licht abstrahlenden Segmente. Die Segmente 3a bis 7a jedes Signallichtes 3 bis 7 werden entsprechend angesteuert bzw. bestromt.

Es ist auch möglich, die Segmente 3a bis 7a zumindest des einen Signallichtes, vorzugsweise aller Signallichter 3 bis 7, in Gruppen zusammenzufassen und die Gruppen einzeln anzusteuern.

Die Segmente 3a bis 7a jedes Signallichtes 3 bis 7 können neben- und/oder übereinander angeordnet sein. Außerdem können die Segmente 3a bis 7a des jeweiligen Signallichtes 3 bis 7 gleich lang, aber auch unterschiedlich lang sein.

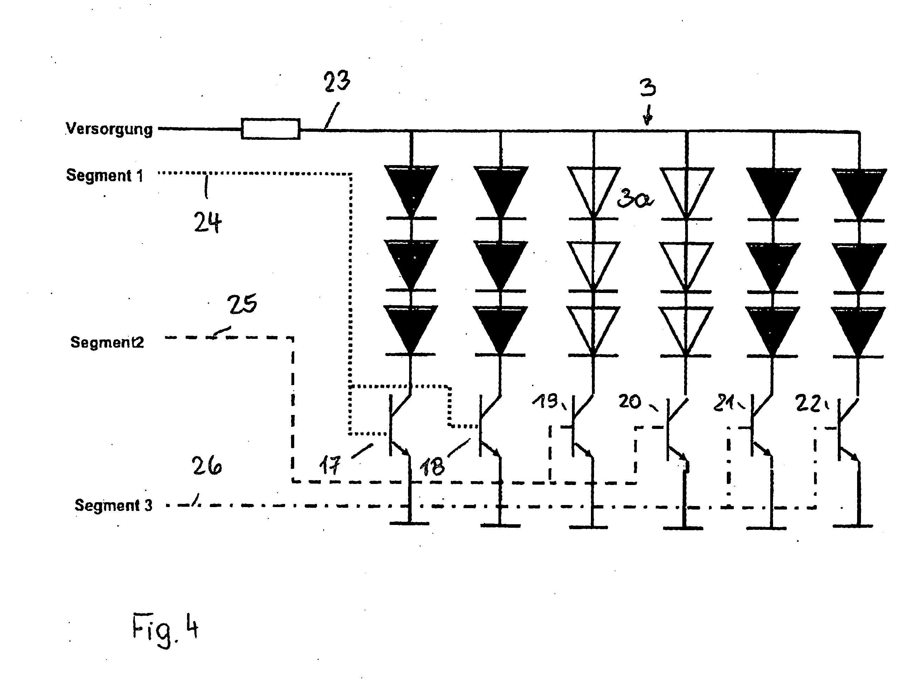

Fig. 4 zeigt eine beispielhafte Ansteuerschaltung für die Leuchte bzw. eines ihrer Signallichter, beispielsweise des Signallichtes 3. Es besteht beispielhaft aus sechs Leuchtmittelsegmenten 3a, die jeweils drei LEDs aufweisen.

Die Leuchtmittelsegmente 3a sind parallelgeschaltet und an eine gemeinsame Stromspannungsleitung 23 angeschlossen. Jedes Segment kann über einen Schalter 17 bis 22, vorzugsweise einen Transistor, angesteuert werden. Im Ausführungsbeispiel werden die Leuchtmittelsegmente 3a jeweils paarweise angesteuert. Es ist aber auch möglich, jedes Segment einzeln anzusteuern. Da im Ausführungsbeispiel die Leuchtmittelsegmente 3a paarweise angesteuert werden, sind dementsprechend drei Ansteuerleitungen 24 bis 26 vorgesehen, mit denen stets zwei Schalter 17, 18; 19, 20; 21, 22 angesteuert werden. Sind alle drei Segmentpaare bestromt, hat das Signallicht 3 seine größte Lichtstärke. In diesem Falle wird über alle drei Ansteuerleitungen 24 bis 26 das Schaltsignal zugeführt. Es ist aber je nach Verkehrssituation möglich, nur über eine oder über zwei Ansteuerleitungen das entsprechende Schaltsignal den entsprechenden Schaltern zuzuführen. Ist nur ein Segmentpaar bestromt, dann hat das Signallicht 3 seine geringste Leuchtstärke. Auf diese Weise kann gezielt die Helligkeit des Signallichtes 3 an die jeweilige Situation angepaßt werden. Dabei kann auch ausgewählt werden, ob beispielsweise das rechte oder das linke oder die beiden rechten oder die beiden linken Segmentpaare bestromt werden. Dadurch wird nicht nur die Helligkeit, sondern auch der Leuchtbereich variiert.

Auf die beschrieben Weise können sämtliche Signallichter der Heckleuchte 2 bestromt werden.

Damit das nachfolgende Kraftfahrzeug 8 erfaßt und seine charakteristischen Werte ermittelt werden können, ist in der Heckleuchte 2 oder im Kraftfahrzeug 1 eine Sensoreinrichtung 11 untergebracht. Sie kann beispielsweise eine Kamera aufweisen, mit der der Bereich hinter dem Kraftfahrzeug 1 erfaßt wird. Die von der Kamera erzeugten Bildsignale werden als Steuersignale einem Steuermodul 12 zugeführt, das diese Signale auswertet und entsprechende Steuersignale an die Heckleuchte 2 abgibt. Auf diese Weise werden die einzelnen Segmente 3a bis 7a so angesteuert, daß die in ihnen befindlichen Lichtquellen unterschiedlich stark leuchten. So werden die in Fahrtrichtung nach hinten gerichteten Leuchtmittel weniger stark bestromt als die Lichtquellen derjenigen Segmente, die zur Seite hin gerichtet sind. Bei der Darstellung gemäß Fig. 2 werden die Leuchtmittel in den Segmenten um so stärker bestrahlt, je größer ihr Strahlwinkel von der Fahrzeuglängsachse abweicht. Auf diese Weise ist sichergestellt, daß die Heckleuchte 2 in ihren Segmenten so bestromt wird, daß die Helligkeit der Heckleuchte 2 unabhängig ist vom Betrachtungswinkel des nachfolgenden Kraftfahrzeuges 8.

Die Sensoreinrichtung 11 kann anstelle der Kamera mit wenigstens einem Umfeldsensor, Treiber und Motoren versehen, mit denen der rückwärtige Verkehr erfaßt und ausgewertet wird. Wie sich aus Fig. 3 ergibt, können mit der Sensoreinrichtung 11 beispielsweise die Positionsdaten des jeweiligen Objektes sowie auch die Richtungsdaten dieses Objektes erfaßt werden. Auch ist es möglich, beispielsweise die Geschwindigkeitsdaten des Objektes mit der Sensoreinrichtung 11 zu ermitteln.

Diese von der Sensoreinrichtung 11 ermittelten Daten müssen noch mit den Daten des Kraftfahrzeuges 1 verknüpft werden, um eine Aussage darüber zu erhalten, in welchem Abstand sich das Objekt hinter dem Fahrzeug befindet, ob es sich unmittelbar hinter dem Kraftfahrzeug 1 oder schräg dazu bewegt, ob das Objekt sich in Richtung auf das Kraftfahrzeug 1 nähert oder gleichen Abstand von ihm behält und dergleichen. Diese fahrzeugspezifischen Daten 13 können zum Beispiel über einen CAN-Bus dem Steuermodul 12 zugeführt werden. Die Geschwindigkeit des Kraftfahrzeuges 1 läßt sich einfach erfassen, ebenso dessen Beschleunigung. Die Geschwindigkeits- und Beschleunigungsdaten werden mit den von der Sensoreinrichtung 11 ermittelten Geschwindigkeits- und Positionsdaten des Objektes verglichen. Aus diesem Vergleich kann abgeleitet werden, ob sich das hinter dem Kraftfahrzeug 1 befindende Objekt bewegt, sich nähert oder stillsteht. Dem Steuermodul 12 werden außerdem Daten zugeführt, die den Lenkwinkel des Kraftfahrzeuges 1 und beispielsweise auch die auf das Bremspedal ausgeübte Kraft bestimmen. Aus dem Lenkwinkel läßt sich ableiten, ob das Kraftfahrzeug 1 sich geradlinig bewegt oder eine Kurve fährt. Mit der Bremskraft wird erfaßt, ob das Fahrzeug abgebremst wird. Aus der Ermittlung der Bremskraft kann auch auf den Zustand der Kraftfahrzeugbremsen geschlossen werden.

Um die rückwärtige sowie die seitliche Verkehrssituation mit der Sensoreinrichtung 11 zu erfassen, können auch andere Sensortechniken eingesetzt werden, die an sich bekannt sind. Hierfür geeignet sind beispielsweise Radar- oder Ultraschalleinrichtungen, mit denen wie mit einer Kamera die Verkehrssituation zuverlässig erfaßt werden kann.

Durch die Verknüpfung der fahrzeugspezifischen Daten 13 mit den sensorspezifischen Daten 14 kann die Heckleuchte 2 so angesteuert werden, daß für alle erfaßten Verkehrsteilnehmer in verschiedenen Richtungen und Abständen die Helligkeit der Heckleuchte unabhängig vom Standort immer gleich erscheint. Somit ist gewährleistet, daß die Heckleuchte 2 von den nachfolgenden Verkehrsteilnehmern zuverlässig erkannt werden kann und insbesondere durch die Heckleuchte nicht geblendet werden. Der rückwärtige Verkehr kann in der beschriebenen Weise überwacht werden.

Fig. 1 zeigt beispielhaft den Fall, daß das Kraftfahrzeug 1 rückwärts in eine Hofeinfahrt, eine Straße oder dergleichen fährt. Mit der betreffenden Heckleuchte 2 können im Fahrweg befindliche Objekte 15, 16 erfaßt werden. Hierbei kann es sich um ruhende Objekte, aber beispielsweise auch um Fußgänger, Fahrradfahrer und dergleichen handeln. Die Sensoreinrichtung 11 erfaßt die Objekte 15, 16 und stellt fest, ob sie ihre Position und/oder ihre Richtung und/oder ihre Geschwindigkeit ändern. Das Steuermodul 12 erhält dann die entsprechenden Signale, die mit den spezifischen Daten des Kraftfahrzeuges 1 verknüpft werden. So kann beispielsweise der Bereich, in dem sich die Objekte 15, 16 befinden, besonders hell angestrahlt werden, damit sie vom Fahrer des Kraftfahrzeuges 1 einwandfrei erkannt werden können. In diesem Falle werden die entsprechenden Segmente 6a beispielsweise des Rückfahrscheinwerfers 6 stärker bestromt als diejenigen Segmente, deren Lichtquelle das Licht an den Objekten 15, 16 vorbei abstrahlen.

Mit den fahrzeugspezifischen Daten 13 und den sensorspezifischen Daten 14 kann auch eine Warnfunktion der Heckleuchten 2 erreicht werden. So kann beispielsweise der Fahrer eines nachfolgenden Kraftfahrzeuges 8, das sich mit hoher Geschwindigkeit dem vorausfahrenden Fahrzeug 1 nähert, rechtzeitig darauf hingewiesen werden, daß das vorausfahrende Fahrzeug 1 eine wesentlich geringere Geschwindigkeit hat als das nachfolgende Kraftfahrzeug 8. Die Sensoreinrichtung 11 kann anhand der erfaßten Positions-, Richtungs- und Geschwindigkeitsdaten des nachfolgenden Kraftfahrzeuges 8 in Verbindung mit den fahrzeugspezifischen Daten 13 feststellen, ob sich das nachfolgende Kraftfahrzeug 8 sehr rasch dem vorausfahrenden Kraftfahrzeug 1 nähert. Das Steuermodul 12, das diese Daten verarbeitet, kann dann beispielsweise beide Heckleuchten 2 gleichzeitig so ansteuern, daß der Fahrer des nachfolgenden Kraftfahrzeuges 8 frühzeitig gewarnt wird. So ist es beispielsweise möglich, daß beide Heckleuchten 2 mit höchster Lichtstärke Licht nach hinten abstrahlen, oder daß die Heckleuchten beispielsweise gleichzeitig oder abwechselnd blinken. Auf diese Weise wird der Fahrer des nachfolgenden Kraftfahrzeuges 8 deutlich darauf aufmerksam gemacht, daß er sich dem vorausfahrenden Fahrzeug 1 nähert. Diese Auslösung der Warnfunktion der Heckleuchte 2 ist insbesondere dann von großem Vorteil, wenn sich das Kraftfahrzeug 1 an einem Stauende befindet und das nachfolgende Kraftfahrzeug 8 auf diese Weise rechtzeitig auf das Stauende hinweist. Die Warnfunktion der Heckleuchte 2 wird selbsttätig ausgelöst, so daß unabhängig von der Aufmerksamkeit des Fahrers im Kraftfahrzeug 1 der nachfolgende Verkehr vor dem Stauende gewarnt wird.

Damit der Bereich seitlich hinter dem Kraftfahrzeug 1 noch besser erfaßt werden kann, können weitere Rückfahrlichtquellen seitlich am Kraftfahrzeug vorgesehen werden, die ihr Licht hauptsächlich oder vollständig seitlich abstrahlen. Dann wird auch der kritische seitliche Bereich zuverlässig ausgeleuchtet.

Bei einer weiteren Ausführungsform werden die Leuchtmittel 3 bis 7 oder auch deren Segmente 3a bis 7a mittels einer Schwenkeinrichtung gezielt verschwenkt. So ist es beispielsweise möglich, das Schlußlicht 4 aufgrund der von der Sensoreinrichtung 11 erfaßten Positions- und Richtungsdaten eines nachfolgendes Objektes so zu verschwenken, daß das vom Schlußlicht 4 abgestrahlte Licht in Richtung auf dieses Objekt strahlt. Auch können nur einzelne Segmente 4a des Schlußlichtes 4 in diese Richtung geschwenkt werden. Das Steuermodul 12 steuert in diesem Falle einen Motor der Schwenkeinrichtung an, um die gewünschte Schwenkung des Leuchtmittels 3 bis 7 oder einzelner oder mehrerer seiner Segmente 3a bis 7a zu erreichen. Die Verschwenkung kann hierbei stufenlos vorgenommen werden, so daß das vom jeweiligen Leuchtmittel abgestrahlte Licht exakt in die gewünschte Richtung abgestrahlt wird. Insbesondere wenn das Fahrzeug 1 rückwärts eine Kurve fährt, kann der Rückfahrscheinwerfer 6 oder eines oder mehrere seiner Segmente 6a so geschwenkt werden, daß der Bereich, in den das Fahrzeug gefahren werden soll, optimal ausgeleuchtet wird.

Die Ablenkung der Lichtstrahlen kann auch mittels optischer Elemente erfolgen, die in den Strahlengang des entsprechenden Signallichtes 3 bis 7 eingebracht werden. Je nachdem, in welche Richtung der Lichtstrahl abgelenkt werden muß, können unterschiedlich gestaltete optische Elemente in den Strahlengang gebracht werden.

Wie anhand der Ausführungsbeispiele beschrieben, kann die Verteilung der Helligkeit entweder über die mechanische Schwenkung der Leuchtmittel oder durch Zuschalten oder stufenweise Helligkeitsvariierung einzelner, für unterschiedliche Abstrahlrichtungen ausgerichtete Leuchtsegmente einer Leuchtfunktion erfolgen, wie ebenfalls beschrieben worden ist. Auf diese Weise kann gleichzeitig der Leuchtbereich und die Leuchtintensität geregelt werden.

Um einen Schwenkvorgang vorzunehmen, kann beispielsweise ein Elektromotor eingesetzt werden, der mit dem jeweiligen Leuchtmittel, einer vor dem Leuchtmittel liegenden Optik oder mit einem dem Leuchtmittel zugeordneten Reflektor verbunden ist. Der Elektromotor wird in Abhängigkeit der fahrzeug- und sensorspezifischen Daten 13, 14 im gewünschten Maße betätigt. Durch den veränderbaren Lichtkegel sowie die Erfassung der Umgebung mittels Sensorik zum Zwecke der Steuerung des jeweiligen Leuchtmittels in Abhängigkeit von anderen Verkehrsteilnehmern oder des Verkehrsgeschehens werden die Signal-, die Warn- und die Sichtwirkung verbessert.

Wie sich aus den beschriebenen Ausführungsformen ergibt, wird nicht nur der Fahrer des eigenen Kraftfahrzeuges bei einer Gefahrensituation gewarnt oder es werden nicht nur Systeme zur Minderung solcher Gefahren aktiviert, wie zum Beispiel Airbags, sondern es wird auch der Fahrer des nachfolgenden Kraftfahrzeuges vor einer Gefahrensituation gewarnt. Er erhält dadurch die Möglichkeit, frühzeitig zu reagieren und so beispielsweise einen Unfall zu verhindern oder in seinen Auswirkungen zumindest zu verringern.

## Patentansprüche

1. Leuchte, insbesondere Heckleuchte eines Fahrzeugs, vorzugsweise eines Kraftfahrzeugs, mit wenigstens zwei Signallichtern, die jeweils wenigstens ein Leuchtmittel aufweisen, wobei die Signalfunktion wenigstens des einen Signallichts (3 bis 7) in Abhängigkeit von sensor-spezifischen Daten (14) einschaltbar oder veränderbar ist, wobei die sensorspezifischen Daten (14) Daten eines außerhalb des Fahrzeuges (1) befindlichen Objekts (15, 16) sind und die Signalfunktion die Lichtstärke des Signallichts (3 bis 7) ist,
**dadurch gekennzeichnet,**
**dass** zumindest das eine, vorzugsweise alle Signallichter (3 bis 7) in Segmente (3a bis 7a) mit jeweils mindestens einem Leuchtmittel aufgeteilt sind, wobei die Segmente (3a bis 7a) des Signallichts (3 bis 7) derart unabhängig voneinander ansteuerbar sind, dass die Helligkeit der Leuchte jeweils abhängig vom Betrachtungswinkel und Abstand der erfassten, außerhalb des Fahrzeugs befindlichen Objekte ist.

2. Leuchte nach Anspruch 1,
**dadurch gekennzeichnet,**
**dass** die Signalfunktion wenigstens des einen Signallichts (3 bis 7) zusätzlich in Abhängigkeit von fahrzeug-spezifischen Daten (13) einschaltbar oder veränderbar ist.

3. Leuchte nach Ansprüche 1 oder 2,
**dadurch gekennzeichnet,**
**dass** zumindest das eine, vorzugsweise alle Signallichter (3 bis 7) mehrere Leuchtmittel haben.

4. Leuchte nach Ansprüche 1, 2 oder 3,
**dadurch gekennzeichnet,**
**dass** das Leuchtmittel eine LED ist.

5. Leuchte nach Ansprüche 1, 2, 3 oder 4,
**dadurch gekennzeichnet,**
**dass** die Segmente (3a bis 7e) des Signallichtes (3 bis 7) zu Gruppen zusammengefasst sind.

6. Leuchte nach Anspruch 5,
**dadurch gekennzeichnet,**
**dass** die Gruppen von Segmenten (3a bis 7a) unabhängig voneinander ansteuerbar sind.

7. Leuchte nach einem der vorhergehenden Ansprüche,
**dadurch gekennzeichnet,**
**dass** das Signallicht (3 bis 7) an eine Steuerung (12) angeschlossen ist, die fahrzeug- und sensorspezifische Daten (13, 14) erhält.

8. Leuchte nach Anspruch 7,
**dadurch gekennzeichnet,**
**dass** die Steuerung (12) aus den fahrzeug- und sensorspezifischen Daten (13, 14) ein Ausgangssignal erzeugt, mit dem das Signallicht (3 bis 7) ansteuerbar ist.

9. Leuchte nach Ansprüche 7 oder 8,
**dadurch gekennzeichnet,**
**dass** die fahrzeugspezifischen Daten (13) die Geschwindigkeit, die Beschleunigung, der Lenkwinkel, der Bremsdruck und dergleichen sind.

10. Leuchte nach Ansprüche 7 bis 9,
**dadurch gekennzeichnet,**
**dass** die sensorspezifischen Daten (14) die Position, die Richtung, die Geschwindigkeit und dergleichen eines außerhalb des Fahrzeuges (1) befindlichen Objektes (15, 16) sind.

11. Leuchte nach Ansprüche 7 bis 10,
**dadurch gekennzeichnet,**
**dass** die sensorspezifischen Daten (14) von einer Sensoreinrichtung (11) im Fahrzeug (1) geliefert werden.

12. Leuchte nach Anspruch 11,
**dadurch gekennzeichnet,**
**dass** die Sensoreinrichtung (11) in die Leuchte (2) integriert ist.

13. Leuchte nach Ansprüche 11 oder 12,
**dadurch gekennzeichnet,**
**dass** die Sensoreinrichtung (11) wenigstens einen Umfeldsensor aufweist.

14. Leuchte nach einem der vorhergehenden Ansprüche,
**dadurch gekennzeichnet,**
**dass** das Signallicht (3 bis 7) schwenkbar ist.

15. Leuchte nach einem der vorhergehenden Ansprüche,
**dadurch gekennzeichnet,**
**dass** zumindest ein, vorzugsweise alle Segmente (3a bis 7a) des Signallichtes (3 bis 7) schwenkbar sind.

16. Leuchte nach einem der vorhergehenden Ansprüche,
**dadurch gekennzeichnet,**
**dass** in den Strahlengang des Signallichtes (3 bis 7) eine Optik einschwenkbar ist.

## Claims

1. Lamp, in particular tail lamp of a vehicle, preferably of a motor vehicle, with at least two signal lights which respectively have at least one illuminating means, wherein the signal function at least of the one signal light (3 to 7) is able to be switched on or changed as a function of sensor-specific data (14), wherein the sensor-specific data (14) are data of an object (15, 16) situated outside the vehicle (1), and the signal function is the light intensity of the signal light (3 to 7),
**characterized in that**
at least the one, preferably all signal lights (3 to 7) are divided into segments (3a to 7a) with respectively at least one illuminating means, wherein the segments (3a to 7a) of the signal light (3 to 7) are able to be actuated independently of each other, such that the brightness of the lamp is respectively dependent on the angle of vision and the distance of the detected objects situated outside the vehicle.

2. Lamp according to Claim 1,
**characterized in that**
the signal function at least of the one signal light (3 to 7) in addition is able to be switched on or changed as a function of vehicle-specific data (13).

3. Lamp according to Claims 1 or 2,
**characterized in that**
at least the one, preferably all signal lights (3 to 7) have several illuminating means.

4. Lamp according to Claims 1, 2 or 3,
**characterized in that**
the illuminating means is a LED.

5. Lamp according to Claims 1, 2, 3 or 4,
**characterized in that**
the segments (3a to 7e) of the signal light (3 to 7) are united into groups.

6. Lamp according to Claim 5,
**characterized in that**
the groups of segments (3a to 7a) are able to be actuated independently of each other.

7. Lamp according to one of the preceding claims, **characterized in that**
the signal light (3 to 7) is connected to a control arrangement (12), which receives vehicle- and sensor-specific data (13, 14).

8. Lamp according to Claim 7,
**characterized in that**
the control arrangement (12) generates an output signal from the vehicle- and sensor-specific data (13, 14), by which the signal light (3 to 7) is able to be actuated.

9. Lamp according to Claims 7 or 8,
**characterized in that**
the vehicle-specific data (13) are the speed, the acceleration, the steering angle, the braking pressure and suchlike.

10. Lamp according to Claims 7 to 9,
**characterized in that**
the sensor-specific data (14) are the position, the direction, the speed and suchlike of an object (15, 16) situated outside the vehicle (1).

11. Lamp according to Claims 7 to 10,
**characterized in that**
the sensor-specific data (14) are supplied from a sensor arrangement (11) in the vehicle (1).

12. Lamp according to Claim 11,
**characterized in that**
the sensor arrangement (11) is integrated into the lamp (2) .

13. Lamp according to Claims 11 or 12,
**characterized in that**
the sensor arrangement (11) has at least one environment sensor.

14. Lamp according to one of the preceding claims, **characterized in that**
the signal light (3 to 7) is pivotable.

15. Lamp according to one of the preceding claims, **characterized in that**
at least one, preferably all segments (3a to 7a) of the signal light (3 to 7) are pivotable.

16. Lamp according to one of the preceding claims, **characterized in that**
optics are able to be pivoted into the path of rays of the signal light (3 to 7).

## Revendications

1. Feux, notamment feux arrières d'un véhicule, de préférence d'un véhicule automobile, comportant au moins deux feux de signalisation, qui présentent respectivement au moins un moyen lumineux, dans lequel la fonction de signalisation d'au moins un des feux de signalisation (3 à 7) peut être mise en service ou modifiée en fonction de données spécifiques du capteur (14), dans lequel les données spécifiques au capteur (14) sont des données d'un objet (15, 16) se trouvant à l'extérieur du véhicule (1) et la fonction de signalisation est l'intensité lumineuse du feu de signalisation (3 à 7),
**caractérisé en ce que**
au moins un, de préférence tous les feux de signalisation (3 à 7) sont divisés en segments (3a à 7a) comportant respectivement au moins un moyen lumineux, dans lequel les segments (3a à 7a) du feu de signalisation (3 à 7) peuvent être commandés indépendamment les uns des autres, de telle sorte que la clarté des feux soit respectivement fonction de l'angle d'observation et de l'espacement des objets détectés, se trouvant à l'extérieur du véhicule.

2. Feux selon la revendication 1,
**caractérisé en ce que**
la fonction de signalisation d'au moins un des feux de signalisation (3 à 7) peut en outre être mise en service ou modifiée en fonction de données spécifiques au véhicule (13).

3. Feux selon les revendications 1 ou 2,
**caractérisé en ce que**
au moins un des, de préférence tous les feux de signalisation (3 à 7) comportent plusieurs moyens lumineux.

4. Feux selon les revendications 1 ,2 ou 3,
**caractérisé en ce que**
le moyen lumineux est une LED.

5. Feux selon les revendications 1,2,3 ou 4,
**caractérisé en ce que**
les segments (3a à 7e) du feu de signalisation (3 à 7) sont rassemblés en groupes.

6. Feux selon la revendication 5,
**caractérisé en ce que**
les groupes de segments (3a à 7a) peuvent être commandés indépendamment les uns des autres.

7. Feux selon une des revendications précédentes,
**caractérisé en ce que**
le feu de signalisation (3 à 7) est connecté à une unité de commande (12), qui contient des données spécifiques au véhicule et au capteur (13 ; 14).

8. Feux selon la revendication 7,
**caractérisé en ce que**
l'unité de commande (12) génère d'après les données spécifiques au véhicule et au capteur (13, 14) un signal de sortie, avec lequel le feu de signalisation (3 à 7) peut être commandé.

9. Feux selon les revendications 7 ou 8,
**caractérisé en ce que**
les données spécifiques au véhicule (13) sont la vitesse, l'accélération, l'angle de direction, la pression de freinage et similaire.

10. Feux selon les revendications 7 à 9,
**caractérisé en ce que**
les données spécifiques au capteur (14) sont la position, la direction, la vitesse et similaire d'un objet (15, 16) se trouvant à l'extérieur du véhicule (1) .

11. Feux selon les revendications 7 à 10,
**caractérisé en ce que**
les données spécifiques au capteur (14) sont délivrées par un dispositif de capteur (11) dans le véhicule (1) .

12. Feux selon la revendication 11,
**caractérisé en ce que**
le dispositif de capteur (11) est intégré dans le feu (2) .

13. Feux selon les revendications 11 ou 12,
**caractérisé en ce que**
le dispositif de capteur (11) présente au moins un capteur d'environnement.

14. Feux selon une des revendications précédentes,
**caractérisé en ce que**
le feu de signalisation (3 à 7) est basculable.

15. Feux selon une des revendications précédentes,
**caractérisé en ce que**
au moins un, de préférence tous les segments (3a à 7a) du feu de signalisation (3 à 7) sont basculables.

16. Feux selon une des revendications précédentes,
**caractérisé en ce que**
dans le trajet du faisceau du feu de signalisation (3 à 7) une optique peut être basculée.
